# EUROPEAN PATENT SPECIFICATION

(11) **EP 2 833 436 B1**
(45) Date of publication and mention of the grant of the patent: **27.07.2016**
(21) Application number: 14179067.5
(22) Date of filing: 30.07.2014
(51) Int. Cl.: H01M 2/10

(54) **Battery pack having structure for mounting to the outside**
Batteriepack mit Struktur zur Montage an der Außenseite
Bloc-batterie ayant une structure de montage pour l'extérieur

(30) Priority: 31.07.2013 KR 20130090872
(43) Date of publication of application: 04.02.2015
(73) Proprietor: LG Chem, Ltd., Seoul 150-721 (KR)
(72) Inventor: Lee, BumHyun, 305-380 DAEJEON (KR); Kim, MinJung, 305-380 DAEJEON (KR); Shin, Jin-Kyu, 305-380 DAEJEON (KR)
(74) Representative: Cabinet Plasseraud

(56) References cited:
- WO-A1-2007/102672
- WO-A1-2013/103211
- KR-B1- 101 285 712
- US-A1- 2011 020 677

## Description

### [TECHNICAL FIELD]

The present invention relates to a battery pack including an external mounting structure and, more particularly, to a battery pack including at least one module assembly configured to have a structure in which battery modules, each of which includes a plurality of unit cells electrically connected to each other while being stacked, are arranged while being adjacent to each other, a pair of side support members configured to have a structure to surround sides of the outermost ones of the battery modules of the module assembly, two or more coupling members to couple the side support members to the module assembly, a base plate provided at one surface with fastening parts coupled to the side support members and at the other surface thereof with an external mounting part mounted to an external structure, and a sheathing cover coupled to the base plate while surrounding the module assembly.

### [BACKGROUND ART]

Recently, a secondary battery, which can be charged and discharged, has been widely used as an energy source for wireless mobile devices. In addition, the secondary battery has attracted considerable attention as a power source for electric vehicles (EV), hybrid electric vehicles (HEV), and plug-in hybrid electric vehicles (Plug-in HEV), which have been developed to solve problems, such as air pollution, caused by existing gasoline and diesel vehicles using fossil fuels.

In addition, technology related to a power storage device that stores electric power and stably supplies the stored electric power to a power system when needed has been developed. The power storage device is a device that stores electric power when power demand is low and supplies the stored electric power in case of overload or emergency. The power storage device provides the effect of improving quality of electric power and energy efficiency. In particular, a market for a household power storage device and a middle-sized industrial or commercial power storage device has been rapidly expanding as the power storage devices are related to smart grid technology.

Meanwhile, for a battery pack to provide output and capacity required by a predetermined apparatus or device, it is necessary for the battery pack to be configured to have a structure in which a plurality of unit cells or a plurality of battery modules, each of which includes a plurality of unit cells, is electrically connected to each other in series or in parallel. In addition, it is necessary for the battery pack to be configured to have a structure which is easily extendable and stable as the capacity of the battery pack is increased.

Particularly, in a case in which a plurality of battery modules is used to constitute the battery pack, a plurality of members, such as bus bars or power connection cables, for mechanical fastening and electrical connection between the battery modules is generally needed and, as a result, a process of assembling such members is very complicated. Furthermore, in a case in which it is necessary to extend the battery pack, it is difficult to modify the structure of the battery pack and it is necessary to add a plurality of parts, thereby increasing manufacturing cost.

In addition, since the battery pack is configured to have a structure in which a plurality of parts is assembled, structural safety of the battery pack is further required in consideration of expansion and contraction of the battery pack due to repetitive charge and discharge of the battery pack and deterioration, short circuit, or explosion of the battery pack due to malfunction of the battery pack.

Consequently, there is a high necessity for technology to fundamentally solve the above problems.

Patent document D1 (US2011/020677 A1) discloses a middle- or large-sized battery pack of high cooling efficiency including a module assembly constructed in a structure in which a plurality of battery modules are arranged.

### [DISCLOSURE]

### [TECHNICAL PROBLEM]

Therefore, the present invention has been made to solve the above problems, and other technical problems that have yet to be resolved.

It is an object of the present invention to provide a battery pack that is easily assembled, is extended through a simple process, is configured to have a compact structure, and has high structural stability.

It is another object of the present invention to provide a battery pack configured to have a structure in which the battery pack is easily detachably mounted to an external structure or an external device and mobility of the battery pack is improved.

### [TECHNICAL SOLUTION]

In accordance with one aspect of the present invention, the above and other objects can be accomplished by the provision of a battery pack as defined in the attached set of claims. It is described a battery pack including (a) at least one module assembly configured to have a structure in which battery modules, each of which includes a plurality of unit cells electrically connected to each other while being stacked, are arranged while being adjacent to each other, (b) a pair of side support members configured to have a structure to surround sides of the outermost ones of the battery modules of the module assembly, (c) two or more coupling members to couple the side support members to the module assembly, (d) a base plate provided at one surface with fastening parts coupled to the side support members and at the other surface thereof with an external mounting part mounted to an external structure, and (e) a sheathing cover coupled to the base plate while surrounding the module assembly.

That is, the battery pack according to the present invention is configured to have a structure in which the at least one module assembly including the battery modules coupled to each other is mounted at the base plate in a state in which the side support me mbers are coupled to the module assembly using the coupling members. As a result, the battery modules can be stably mounted in the battery pack, the battery pack is easily assembled, and one or more battery modules can be added through a simple process. Consequently, the battery pack has high extensibility.

In addition, the battery pack according to the present invention includes the external mounting part, through which the battery pack can be easily mounted to or separated from an external structure.

In a concrete example, each of the unit cells may be configured to have a structure including one plate-shaped battery cell or a battery cell assembly structure in which two or more plate-shaped battery cells are mounted in a cell cover in a state in which electrode terminals of the battery cells are exposed.

The plate-shaped battery cell may be, for example, a pouch-shaped battery cell configured to have a structure in which an electrode assembly is mounted in a battery case made of a laminate sheet including a resin layer and a metal layer.

Specifically, the battery cell may be a pouch-shaped battery cell configured to have a structure in which an electrode assembly of a cathode/separator/anode structure is mounted in a battery case together with an electrolyte in a sealed state. For example, the battery cell may be a plate-shaped battery cell configured to have an approximately hexahedral structure having a small thickness to width ratio. Generally, the pouch-shaped battery cell includes a pouch-shaped battery case. The battery case is configured to have a laminate sheet structure in which an outer coating layer formed of a polymer resin exhibiting high durability, a barrier layer formed of a metal material blocking moisture or air, and an inner sealant layer formed of a thermally bondable polymer resin are sequentially stacked.

The battery case of the pouch-shaped battery cell may be configured to have various structures. For example, the case of the pouch-shaped battery cell may be configured to have a structure in which an electrode assembly is received in a receiving part formed at an upper inner surface and/or a lower inner surface of a two-unit member and the upper and lower contact regions of the edge of the battery case are sealed by thermal bonding. The pouch-shaped battery cell with the above-stated construction is disclosed in PCT International Application No. PCT/KR2004/003312, which has been filed in the name of the applicant of the present patent application. Alternatively, the battery case may be configured to have a structure in which an electrode assembly is received in a receiving part formed at an upper inner surface and/or a lower inner surface of a one-unit member and the upper and lower contact regions of the edge of the battery case are sealed by thermal bonding.

The battery cell is not particularly restricted so long as a battery module or a battery pack constituted by the battery cell can provide high voltage and current. For example, the battery cell may be a lithium secondary battery having a large storage quantity of energy per volume.

In a concrete example, each of the battery modules may be configured to have a unit cell stack structure in which two or more unit cells are mounted in a cartridge and an upper plate and a lower plate may be mounted to the outermost ones of the battery cells of the unit cell stack structure to fix the unit cell stack structure. For example, the cartridges forming the unit cell stack structure may be provided with fastening holes, through which fastening members are inserted and then fixed to the upper and lower plates such that the unit cell stack structure can be fixed between the upper and lower plates.

In the present invention, the side support members and the battery modules are provided at edges thereof with coupling holes, into which the coupling members are mechanically fastened.

Specifically, each of the side support members are formed in a triangular shape and the coupling holes are formed at the edges of each of the triangular side support members. At least one of the side support members may be formed in a right triangular shape in which two edges of the at least one of the side support members are adjacent to the base plate.

In addition, each of the side support members is configured to have a plate-shaped structure and has one or more openings to improve rigidity of the plate-shaped structure of each of the side support members and to allow heat generated from the module assembly to be discharged out of the battery pack therethrough.

The side support members may be coupled to the base plate. Specifically, one end of each of the side support members may be bent to contact the base plate and the bent end of each of the side support members may be provided with two or more fastening grooves, into which fastening parts of the base plate are coupled. In this case, one end of each of the side support members may be fastened to the base plate using, for example, bolts or rivets.

The structure of the coupling members to couple the side support members to the module assembly is not particularly restricted. For example, the coupling members may be long bolts or retractable bolts. The coupling members may couple the side support members to the outermost battery modules of the module assembly. Alternatively, the coupling members may be inserted through the coupling holes and then coupled to the side support members,

The base plate and/or the sheathing cover may be provided at the outer surface thereof with reinforcing beads formed to have a concave-convex structure to improve rigidity of the base plate and/or the sheathing cover

In addition, the base plate may have a ventilation hole communicating with the outside of the battery pack to allow heat generated from the battery modules to be discharged out of the battery pack therethrough.

One module assembly may be coupled to the base plate in a state in which the module assembly is fixed by the side support members. According to circumstances, two or more module assemblies may be coupled to the base plate in a state in which each of the module assemblies is fixed by the side support members.

The external mounting part of the base plate may be coupled to an external structure. For example, the external structure may be tilted from the ground by an angle of 20 to 160 degrees. Specifically, the base plate may be coupled to an external structure tilted from the ground by an angle of 60 to 120 degrees. For example, the external structure may be one side of a facility or an apparatus or a wall of a building.

Meanwhile, the sheathing cover of the battery pack may be provided at at least one side thereof with a handle for transportation. The handle for transportation may be configured to have various structures. For example, the handle for transportation may be configured to have a structure in which a portion of the sheathing cover is depressed, a structure in which a portion of the sheathing cover protrudes outward, or a structure in which a handle-shaped member is mounted at the sheathing cover.

The external mounting part of the base plate may be configured to have various structures mounted at the external structure. For example, the external mounting part may be configured to have a downwardly bent protruding structure and the external structure may be provided with a groove in which the downwardly bent protruding structure of the external mounting part is mounted or a catching member by which the downwardly bent protruding structure of the external mounting part is caught.

In a concrete example, the at least one module assembly may include a first module assembly having two or more battery modules arranged while being adjacent to each other and a second module assembly having two or more battery modules arranged while being adjacent to each other. In this case, the first module assembly and the second module assembly may be arranged such that side support members for the first module assembly and the second module assembly are located in the same direction.

The module assemblies may include the same number of battery modules. Alternatively, the module assemblies may include different numbers of battery modules. For example, the number of the battery modules of the first module assembly may be greater than that of the battery modules of the second module assembly.

In addition, the first module assembly and the second module assembly may be fixed to each other by a bracket on the opposite side of the base plate. Consequently, the bracket may be a plate-shaped member to which one side of each of the side support members for the first module assembly and one side of each of the side support members for the second module assembly are fixed.

In addition, each of the side support members for the first module assembly and the second module assembly may be formed in a right triangular shape in which two edges of each of the side support members are adjacent to the base plate and one side of each of the right-triangular side support members for the first module assembly corresponding to the base plate and one side of each of the right-triangular side support members for the second module assembly corresponding to the base plate may face each other. In this case, the sides facing each other may be fastened and fixed. In addition, the edges of the side support members located on the opposite side of the base plate may be fixed by the bracket.

The first module assembly and the second module assembly may be arranged up and down in a direction perpendicular to the ground.

In accordance with another aspect of the present invention, there is provided a device including the battery pack with the above-stated construction.

Specifically, the device may be a household power supply, a power supply for public facilities, a power supply for large-sized stores, a power supply for emergency, a power supply for computer rooms, a portable power supply, a power supply for medical facilities, a power supply for fire extinguishing facilities, a power supply for alarm facilities, a power supply for refuge facilities, an electric vehicle, a hybrid electric vehicle, or a plug-in hybrid electric vehicle.

The structures and manufacturing methods of the above-specified devices are well known in the art to which the present invention pertains and thus a detailed description thereof will be omitted.

### [EFFECTS OF THE INVENTION]

As is apparent from the above description, the battery pack according to the present invention is configured to have a structure in which a module assembly including a plurality of battery modules coupled to each other is mounted at a base plate in a state in which side support members are coupled to the module assembly using coupling members. As a result, the battery modules can be stably mounted in the battery pack, the battery pack is easily assembled, and one or more battery modules can be added through a simple process. Consequently, the battery pack has high extensibility.

In addition, the battery pack according to the present invention includes an external mounting part, through which the battery pack can be easily mounted to or separated from an external structure.

### [BRIEF DESCRIPTION OF DRAWINGS]

The above and other objects, features and other advantages of the present invention will be more clearly understood from the following detailed description taken in conjunction with the accompanying drawings, in which:
FIG. 1 is a perspective view showing an embodiment of a battery cell constituting a unit cell of a battery module according to the present invention;
FIG. 2 is a perspective view showing a unit cell configured to have a structure in which battery cells, one of which is shown in FIG. 1, are mounted in a cell cover according to an embodiment of the present invention;
FIG. 3 is a perspective view showing a battery pack according to an embodiment of the present invention;
FIG. 4 is an exploded perspective view of the battery pack shown in FIG. 3;
FIG. 5 is a perspective view showing the battery pack of FIG. 3 stood perpendicular to the ground;
FIG. 6 is a side typical view showing a region at which external mounting parts are formed;
FIG. 7 is a perspective view showing a structure in which module assemblies are mounted at a base plate;
FIG. 8 is a perspective view showing a structure in which side support members are coupled to the module assemblies;
FIG. 9 is an enlarged view showing a first module assembly region of FIG. 8; and
FIG. 10 is a perspective view showing a structure in which a bracket is mounted between the module assemblies.

### [DETAILED DESCRIPTION OF THE INVENTION]

Now, exemplary embodiments of the present invention will be described in detail with reference to the accompanying drawings. It should be noted, however, that the scope of the present invention is not limited by the illustrated embodiments.

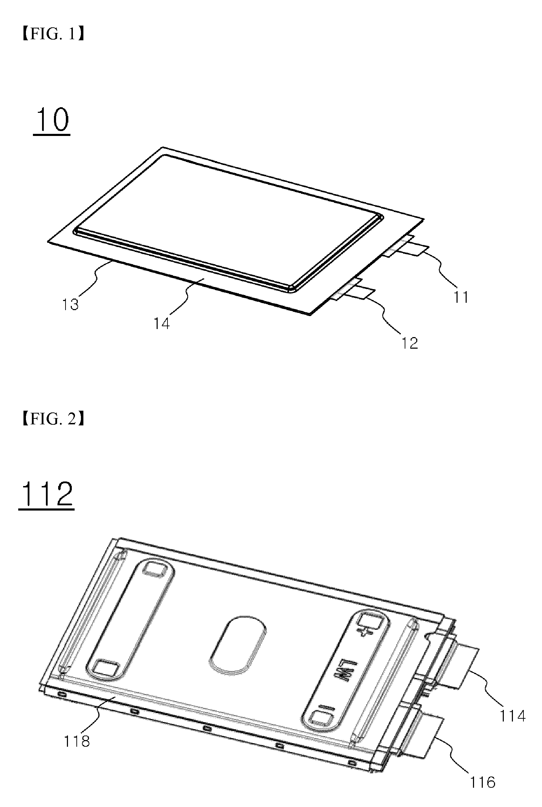

FIG. 1 is a perspective view showing an embodiment of a battery cell constituting a unit cell of a battery module according to the present invention and FIG. 2 is a perspective view showing a unit cell configured to have a structure in which battery cells, one of which is shown in FIG. 1, are mounted in a cell cover according to an embodiment of the present invention.

Referring to FIG. 1, a battery cell 10 is a plate-shaped battery cell having electrode terminals (a cathode terminal 11 and an anode terminal 12) formed at one end thereof. Specifically, the plate-shaped battery cell 10 is configured to have a structure in which an electrode assembly (not shown) is mounted in a pouch-shaped case 13 made of a laminate sheet including a metal layer (not shown) and a resin layer (not shown) and a sealed portion 14 is formed, for example, by thermal bonding. Generally, the plate-shaped battery cell with the above-stated construction may also be referred to as a pouch-shaped battery cell.

Referring to FIG. 2, a unit cell 112 is configured to have a structure in which two plate-shaped battery cells are mounted in a cell cover 118 in a state in which electrode terminals 114 and 116 of the battery cells are exposed from one side of the cell cover 118. The cell cover 118 of the unit cell 102 includes a pair of sheathing members coupled to each other to surround outer surfaces of the battery cells excluding the electrode terminals 114 and 116. The battery cells are mounted in the cell cover 118 such that the battery cells are stacked. The electrode terminals 114 and 116 of the battery cells are exposed outward from the cell cover in a state in which the same electrodes of the battery cells are connected in parallel to each other while being adjacent to each other.

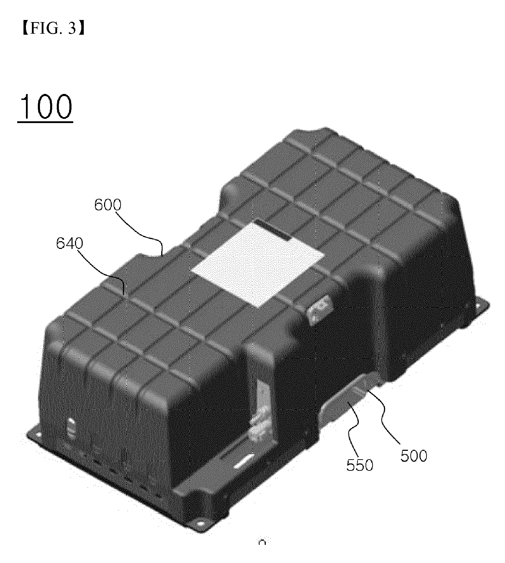

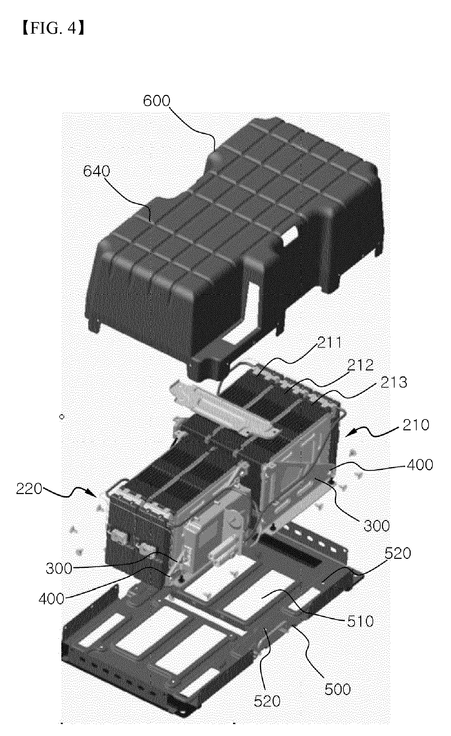

FIG. 3 is a perspective view showing a battery pack according to an embodiment of the present invention and FIG. 4 is an exploded perspective view of the battery pack shown in FIG. 3.

Referring to FIGS. 3 and 4, a battery pack 100 includes module assemblies 210 and 220, side support members 300, coupling members 400, a base plate 500, and a sheathing cover 600.

The module assembly 210 is configured to have a structure in which battery modules 211, 212, and 213, each of which includes a plurality of unit cells electrically connected to each other while being stacked, are arranged in a lateral direction. The side support members 300 are coupled to the module assembly 210 through the coupling members 400 to surround sides of the outermost battery modules 211 and 213 of the module assembly.

The base plate 500 is a plate-shaped member having ventilation holes 510 communicating with the outside of the battery pack to discharge heat generated from the battery modules 211, 212, and 213 out of the battery pack. The base plate 500 is provided at one surface thereof with fastening members 520 coupled to the side support members 300. The base plate 500 is provided at the other surface thereof with external mounting part s mounted to an external structure. The sheathing cover 600 is coupled to the base plate 500 while surrounding the module assemblies 210 and 220 to protect the module assemblies 210 and 220 from the outside of the battery pack. The sheathing cover 600 is provided at the outer surface thereof with reinforcing beads 640 formed to have a concave-convex structure.

Meanwhile, the sheathing cover 600 of the battery pack 100 is provided at opposite sides thereof with handles 550 for transportation which are depressed inward such that the handles 550 can be easily held.

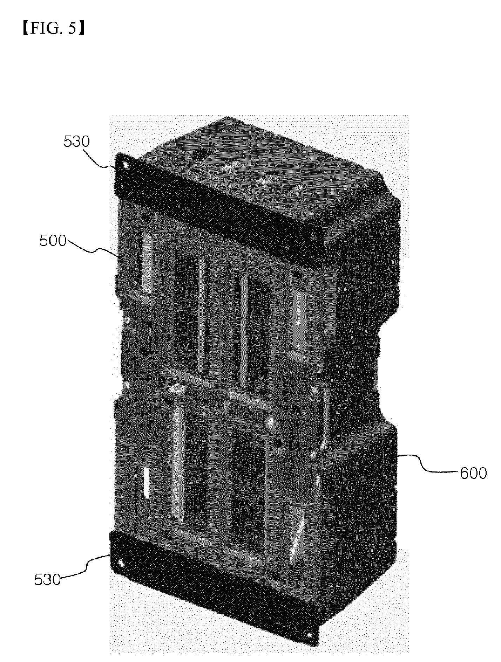

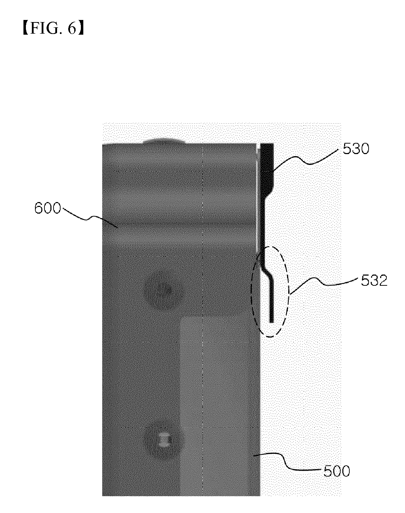

FIG. 5 is a perspective view showing the battery pack of FIG. 3 stood perpendicular to the ground and FIG. 6 is a side typical view showing a region at which external mounting parts are formed.

Referring to FIGS. 5 and 6, external mounting parts 530 are formed at the upper end and the lower end of the base plate 500. Each external mounting part 530 is configured to have a downwardly bent protruding structure 532 such that each external mounting part 530 can be mounted at an external structure (not shown) having grooves or catching members. As shown in FIG. 6, each external mounting part 530 is configured to have a structure in which an additional member is coupled to the base plate 500. Alternatively, a portion of the base plate 500 may be bent to form each external mounting part 530. The external structure may be a structure tilted from the ground by a predetermined angle. For example, the external structure may be one side of a facility or an apparatus or a wall of a building. Grooves or catching members may be formed at the external structure and then each external mounting part 530 may be mounted at the external structure.

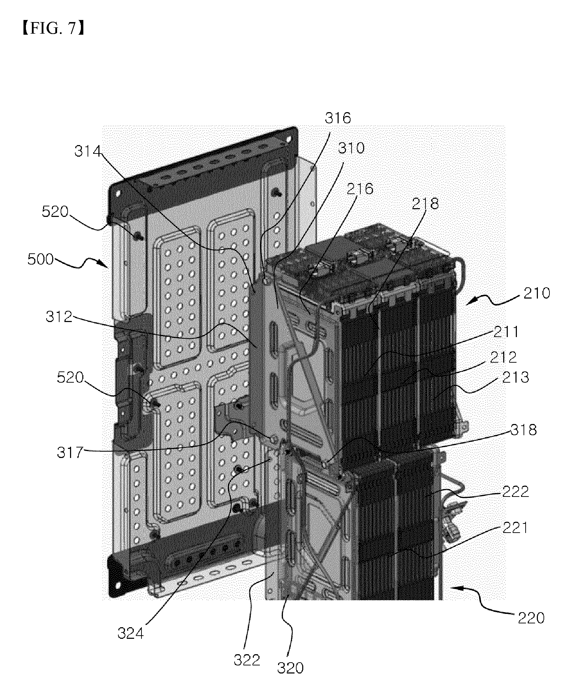

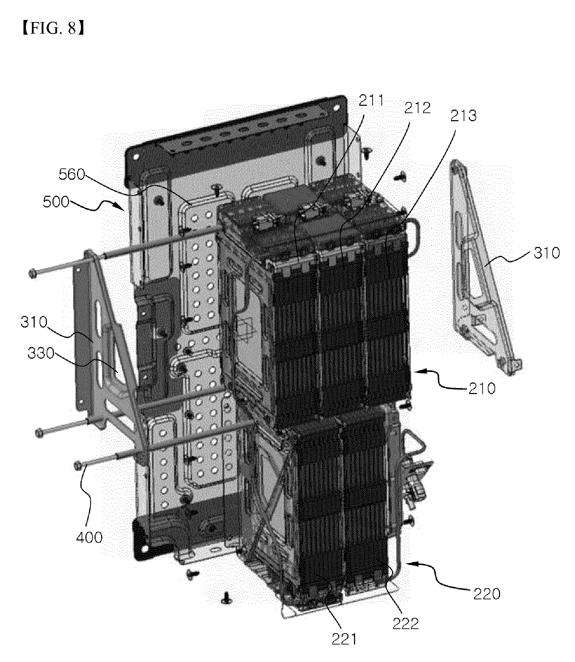

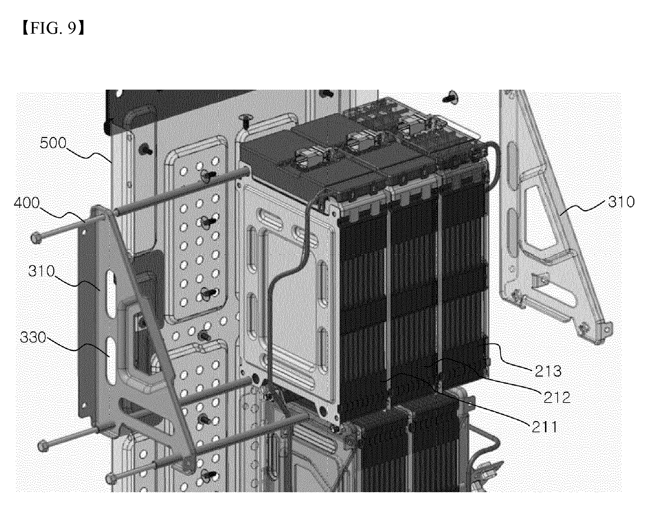

FIG. 7 is a perspective view showing a structure in which the module assemblies are mounted at the base plate, FIG. 8 is a perspective view showing a structure in which the side support members are coupled to the module assemblies, and FIG. 9 is an enlarged view showing a first module assembly region of FIG. 8.

Referring to these drawings, a first module assembly 210 having three battery modules 211, 212, and 213, which are arranged while being adjacent to one another, and a second module assembly 220 having two battery modules 221 and 222, which are arranged while being adjacent to each other, are arranged up and down.

Each of the battery modules 211, 212, 213, 221, and 222 is configured to have a unit cell stack structure in which two or more unit cells are mounted in a cartridge. An upper plate 216 and a lower plate 218 are mounted to the outermost battery cells of the unit cell stack structure to fix the unit cell stack structure.

Side support members 310 and 320 are coupled to the base plate 500. Specifically, one end 312 of each side support member 310 and one end 322 of each side support member 320 are bent to contact the base plate 500. The bent ends 312 and 322 of the side support members 310 and 320 are provided with fastening grooves 314 and 324, into which fastening parts 520 of the base plate 500 are coupled. The fastening parts 520 of the base plate 500 coupled into the fastening grooves 314 and 324 of the side support members 310 and 320 may be bolts or rivets.

Each side support member 310 and the battery modules 211, 212, and 213 are provided at edges thereof with coupling holes 316, 317, and 318, into which the coupling members 400 are mechanically fastened. Specifically, each side support member 310 is formed in a triangular shape. The coupling holes 316, 317, and 318 are formed at the edges of each triangular side support member 310. Two of the three edges are adjacent to the base plate 500. That is, each side support member 310 is formed in a right triangular shape in which one side of the triangular shape is adjacent to the base plate 500.

In addition, each side support member 310 is provided with openings 330 to improve rigidity of the plate-shaped structure of each side support member 310 and to allow heat generated from the module assemblies 210 and 220 to be discharged out of the battery pack therethrough. The base plate 500 is provided with reinforcing beads 560 formed to have a concave-convex structure.

The coupling members 400 may be long bolts having a sufficient length to couple and fix the battery modules 211, 212, and 213 disposed between the side support members 310. The long bolts are inserted through one of the side support members 310, coupling holes 322, 324, and 326 of the battery modules 211, 212, and 213, and the other side support member 310 such that the side support members 310 are coupled to the battery modules 211, 212, and 213.

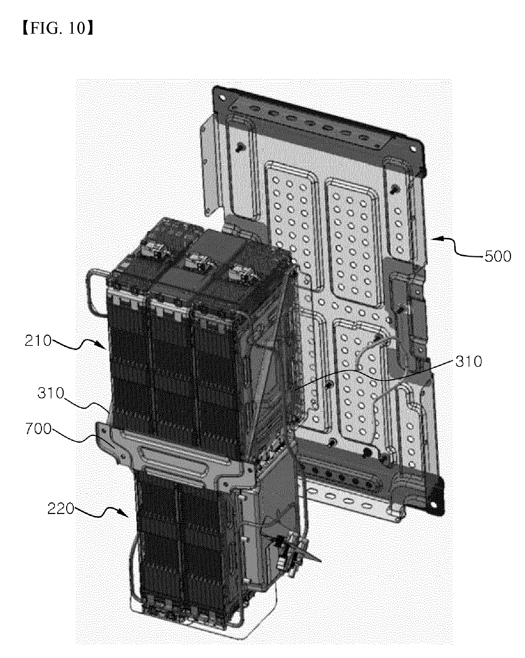

FIG. 10 is a perspective view showing a structure in which a bracket is mounted between the module assemblies.

Referring to FIG. 10 together with FIG. 7, the first module assembly 210 and the second module assembly 220 are fixed to each other by a bracket 700 on the opposite side of the base plate 500. That is, corresponding ends of the side support members 300, which are fixed to the first module assembly 210 and the second module assembly 220, are fixed to each other by the bracket 700.

In addition, each of the side support members 310 and 320, which are fixed to the first module assembly 210 and the second module assembly 220, is formed in a right triangular shape in which two edges of each of the side support members 310 and 320 are adj acent to the base plate 500. One side of each side support member 310, which is formed in the right triangular shape, for the first module assembly 210 and one side of each side support member 320, which is also formed in the right triangular shape, for the second module assembly 220 face each other. The edges of the side support members 310 and 320 located on the opposite side of the base plate 500 are fixed by the bracket 700.

## Claims

1. A battery pack (100) comprising:
(a) at least one module assembly (210) configured to have a structure in which battery modules (211, 212 and 213), each of which comprises a plurality of unit cells (112) electrically connected to each other while being stacked, are arranged while being adjacent to each other;
(b) a pair of side support members (310) configured to have a structure to surround sides of outermost ones of the battery modules (211, 212 and 213) of the module assembly (210);
(c) two or more coupling members (400) to couple the side support members (310) to the module assembly (210);
(d) a base plate (500) provided at one surface with fastening parts (520) coupled to the side support members (310) and at the other surface thereof with an external mounting part (530) mounted to an external structure; and
(e) a sheathing cover (600) coupled to the base plate (500) while surrounding the module assembly;
and **characterized in that**:
the side support members (310) and the battery modules (211, 212 and 213) are provided at edges thereof with coupling holes (316, 317 and 318), into which the coupling members (400) are mechanically fastened; and
each of the side support members (310) is formed in a triangular shape, and the coupling holes (316, 317 and 318) are formed at the edges of each of the triangular side support members (310);
each of the side support members (310) is configured to have a plate-shaped structure and has one or more openings (330).

2. The battery pack (100) according to claim 1, wherein each of the unit cells (112) is configured to have a structure comprising one plate-shaped battery cell (10) or a battery cell assembly structure in which two or more plate-shaped battery cells (10) are mounted in a cell cover (118) in a state in which electrode terminals (114 and 116) of the battery cells (10) are exposed.

3. The battery pack (100) according to claim 2, wherein the plate-shaped battery cell (10) is configured to have a structure in which an electrode assembly is mounted in a battery case made of a laminate sheet comprising a metal layer and a resin layer and an outer edge of the battery case is sealed.

4. The battery pack (100) according to claim 2 or 3, wherein the plate-shaped battery cell (10) is a lithium secondary battery.

5. The battery pack (100) according to any one of claims 1-4, wherein each of the battery modules (211, 212 and 213) is configured to have a unit cell stack structure in which two or more unit cells (112) are mounted in a cartridge and an upper plate (216) and a lower plate (218) are mounted to outermost ones of the battery cells (10) of the unit cell stack structure to fix the unit cell stack structure.

6. The battery pack (100) according to any one of claims 1-5, wherein at least one of the side support members (310) is formed in a right triangular shape in which two edges of the at least one of the side support members (310) are adjacent to the base plate (500).

7. The battery pack (100) according to any one of claims 1-6, wherein one end of each of the side support members (310) is bent to contact the base plate (500), and the bent end of each of the side support members (312) is provided with two or more fastening grooves (314 and 324), into which fastening parts (520) of the base plate (500) are coupled.

8. The battery pack (100) according to claim 7, wherein one end of each of the side support members (310) is fastened to the base plate (500) using bolts or rivets.

9. The battery pack (100) according to any one of claims 1-8, wherein the coupling members (400) are long bolts or retractable bolts.

10. The battery pack (100) according to any one of claims 1-9, wherein the base plate (500) and/or the sheathing cover (600) is provided with reinforcing beads (640) formed to have a concave-convex structure.

11. The battery pack (100) according to any one of claims 1-10, wherein the base plate (500) has a ventilation hole (510) communicating with an outside of the battery pack (100).

12. The battery pack (100) according to any one of claims 1-11, wherein the at least one module assembly comprises two or more module assemblies (210 and 220) coupled to the base plate (500) in a state in which each of the module assemblies (210 and 220) is fixed by the side support members (310 and 320).

13. The battery pack (100) according to any one of claims 1-12, wherein the base plate (500) is coupled to an external structure tilted from a ground by an angle of 20 to 160 degrees.

14. The battery pack (100) according to claim 13, wherein the base plate (500) is coupled to an external structure tilted from the ground by an angle of 60 to 120 degrees.

15. The battery pack (100) according to any one of claims 1-14, wherein the sheathing cover (600) is provided at least one side thereof with a handle (550) for transportation.

16. The battery pack (100) according to any one of claims 1-15, wherein the external mounting part (530) is configured to have a downwardly bent protruding structure (532).

17. The battery pack (100) according to any one of claims 1-16, wherein the at least one module assembly (210 and 220) comprises a first module assembly (210) having two or more battery modules (211, 212 and 213) arranged while being adjacent to each other and a second module assembly (220) having two or more battery modules (221 and 222) arranged while being adjacent to each other, the first module assembly (210) and the second module assembly (220) being arranged such that side support members for the first module assembly (310) and the second module assembly (320) are located in the same direction.

18. The battery pack (100) according to claim 17, wherein the number of the battery modules (211, 212 and 213) of the first module assembly (210) is greater than the number of the battery modules (221 and 222) of the second module assembly (220).

19. The battery pack (100) according to claim 17 or 18, wherein the first module assembly (210) and the second module assembly (220) are fixed to each other by a bracket (700) on the opposite side of the base plate (500).

20. The battery pack (100) according to any one of claims 17-19, wherein each of the side support members (310 and 320) for the first module assembly (210) and the second module assembly (220) is formed in a right triangular shape in which two edges of each of the side support members (310 and 320) are adjacent to the base plate (500), and wherein one side of each of the right-triangular side support members (310) for the first module assembly (210) corresponding to the base plate (500) and one side of each of the right-triangular side support members (320) for the second module (220) assembly corresponding to the base plate (500) face each other.

21. The battery pack (100) according to any one of claims 17-20, wherein the first module assembly (210) and the second module assembly (220) are arranged up and down in a direction perpendicular to a ground.

22. A device comprising a battery pack according to any one of claims 1-21.

23. The device according to claim 22, wherein the device is a household power supply, a power supply for public facilities, a power supply for large-sized stores, a power supply for emergency, a power supply for computer rooms, a portable power supply, a power supply for medical facilities, a power supply for fire extinguishing facilities, a power supply for alarm facilities, a power supply for refuge facilities, an electric vehicle, a hybrid electric vehicle, or a plug-in hybrid electric vehicle.

## Patentansprüche

1. Batteriepack (100), mit:
(a) zumindest einer Modulanordnung (210), die ausgestaltet ist, um eine Struktur aufzuweisen, bei welcher Batteriemodule (211, 212 und 213), von welchen jedes eine Vielzahl an Einheitszellen (112) aufweist, die elektrisch miteinander verbunden sind, während sie gestapelt sind, angeordnet sind, während sie aneinander angrenzend sind;
(b) einem Paar an Seitenstützelementen (310), die ausgestaltet sind, um eine Struktur aufzuweisen, um Seiten von Äußersten der Batteriemodule (211, 212 und 213) der Modulanordnung (210) zu umgeben;
(c) zwei oder mehr Kopplungselementen (400), um die Seitenstützelemente (310) an die Modulanordnung (210) zu koppeln;
(d) einer Grundplatte (500), die an einer Oberfläche mit an die Seitenstützelemente (310) gekoppelten Befestigungsteilen (520), und an der anderen Oberfläche von ihr mit einem an eine Außenstruktur montierten Außenmontageteil (530) versehen ist; und
(e) einer Umhüllungsabdeckung (600), die an die Grundplatte (500) gekoppelt ist, während sie die Modulanordnung umgibt;
und **dadurch gekennzeichnet, dass**:
die Seitenstützelemente (310) und die Batteriemodule (211, 212 und 213) an Rändern von ihnen mit Kopplungslöchern (316, 317 und 318) versehen sind, in welchen die Kopplungselemente (400) mechanisch befestigt sind; und
jedes der Seitenstützelemente (310) in eine Dreieckform ausgebildet ist, und die Kopplungslöcher (316, 317 und 318) an den Rändern von jedem der dreieckigen Seitenstützelemente (310) ausgebildet sind;
wobei jedes der Seitenstützelemente (310) ausgestaltet ist, um eine plattenförmige Struktur aufzuweisen, und eine oder mehr Öffnungen (330) aufweist.

2. Batteriepack (100) nach Anspruch 1, wobei jede der Einheitszellen (112) ausgestaltet ist, um eine Struktur mit einer plattenförmigen Batteriezelle (10) oder eine Batteriezellenanordnungsstruktur aufzuweisen, bei welcher zwei oder mehr plattenförmige Batteriezellen (10) in einer Zellenabdeckung (118) montiert sind, in einem Zustand, in welchem Elektrodenanschlüsse (114 und 116) der Batteriezellen (10) freiliegend sind.

3. Batteriepack (100) nach Anspruch 2, wobei die plattenförmige Batteriezelle (10) ausgestaltet ist, um eine Struktur aufzuweisen, bei welcher eine Elektrodenanordnung in einem Batteriegehäuse montiert ist, das aus einem Laminatbogen mit einer Metallschicht und einer Harzschicht hergestellt ist, und ein äußerer Rand des Batteriegehäuses abgedichtet ist.

4. Batteriepack (100) nach Anspruch 2 oder 3, wobei die plattenförmige Batteriezelle (10) eine Lithium-Sekundärbatterie ist.

5. Batteriepack (100) nach einem der Ansprüche 1 bis 4, wobei jedes der Batteriemodule (211, 212 und 213) ausgestaltet ist, um eine Einheitszellenstapelstruktur aufzuweisen, bei welcher zwei oder mehr Einheitszellen (112) in einer Kassette montiert sind, und eine obere Platte (216) und eine untere Platte (218) an Äußersten der Batteriezellen (10) der Einheitszellenstapelstruktur montiert sind, um die Einheitszellenstapelstruktur zu fixieren.

6. Batteriepack (100) nach einem der Ansprüche 1 bis 5, wobei zumindest eines der Seitenstützelemente (310) in Form eines rechtwinkligen Dreiecks ausgebildet ist, bei welcher zwei Ränder von dem zumindest einen der Seitenstützelemente (310) an die Grundplatte (500) angrenzend sind.

7. Batteriepack (100) nach einem der Ansprüche 1 bis 6, wobei ein Ende von jedem der Seitenstützelemente (310) gebogen ist, um die Grundplatte (500) zu berühren, und das gebogene Ende von jedem der Seitenstützelemente (312) mit zwei oder mehr Befestigungsnuten (314 und 324) versehen ist, in welche Befestigungsteile (520) der Grundplatte (500) gekoppelt sind.

8. Batteriepack (100) nach Anspruch 7, wobei ein Ende von jedem der Seitenstützelemente (310) an der Grundplatte (500) unter Verwendung von Bolzen oder Nieten befestigt ist.

9. Batteriepack (100) nach einem der Ansprüche 1 bis 8, wobei die Kopplungselemente (400) lange Bolzen oder zurückziehbare Bolzen sind.

10. Batteriepack (100) nach einem der Ansprüche 1 bis 9, wobei die Grundplatte (500) und/oder die Umhüllungsabdeckung (600) mit Verstärkungsrippen (640) versehen ist, die ausgebildet sind, um eine konkav-konvexe Struktur aufzuweisen.

11. Batteriepack (100) nach einem der Ansprüche 1 bis 10, wobei die Grundplatte (500) ein Lüftungsloch (510) aufweist, das mit einer Außenseite des Batteriepacks (100) in Verbindung steht.

12. Batteriepack (100) nach einem der Ansprüche 1 bis 11, wobei die zumindest eine Modulanordnung zwei oder mehr Modulanordnungen (210 und 220) umfasst, die an die Grundplatte (500) gekoppelt sind, in einem Zustand, in welchem jede der Modulanordnungen (210 und 220) durch die Seitenstützelemente (310 und 320) fixiert ist.

13. Batteriepack (100) nach einem der Ansprüche 1 bis 12, wobei die Grundplatte (500) an eine Außenstruktur gekoppelt ist, die um einen Winkel von 20 bis 160 Grad von einer Basis geneigt ist.

14. Batteriepack (100) nach Anspruch 13, wobei die Grundplatte (500) an eine Außenstruktur gekoppelt ist, die um einen Winkel von 60 bis 120 Grad von einer Basis geneigt ist.

15. Batteriepack (100) nach einem der Ansprüche 1 bis 14, wobei die Umhüllungsabdeckung (600) an zumindest einer Seite von ihr mit einem Griff (550) zum Transport versehen ist.

16. Batteriepack (100) nach einem der Ansprüche 1 bis 15, wobei der Außenmontageteil (530) ausgestaltet ist, um eine nach unten gebogene vorstehende Struktur (532) aufzuweisen.

17. Batteriepack (100) nach einem der Ansprüche 1 bis 16, wobei die zumindest eine Modulanordnung (210 und 220) eine erste Modulanordnung (210) mit zwei oder mehr Batteriemodulen (211, 212 und 213), die angeordnet sind, während sie aneinander angrenzend sind, und eine zweite Modulanordnung (220) mit zwei oder mehr Batteriemodulen (221 und 222) umfasst, die angeordnet sind, während sie aneinander angrenzend sind, wobei die erste Modulanordnung (210) und die zweite Modulanordnung (220) derart angeordnet sind, dass sich Seitenstützelemente für die erste Modulanordnung (310) und die zweite Modulanordnung (320) in der gleichen Richtung befinden.

18. Batteriepack (100) nach Anspruch 17, wobei die Anzahl der Batteriemodule (211, 212 und 213) der ersten Modulanordnung (210) größer als die Anzahl der Batteriemodule (221 und 222) der zweiten Modulanordnung (220) ist.

19. Batteriepack (100) nach Anspruch 17 oder 18, wobei die erste Modulanordnung (210) und die zweite Modulanordnung (220) durch eine Halterung (700) an der gegenüberliegenden Seite der Basisplatte (500) aneinander fixiert sind.

20. Batteriepack (100) nach einem der Ansprüche 17 bis 19, wobei jedes der Seitenstützelemente (310 und 320) für die erste Modulanordnung (210) und die zweite Modulanordnung (220) in einer Form eines rechtwinkligen Dreiecks ausgebildet ist, bei welcher zwei Ränder von jedem der Seitenstützelemente (310 und 320) an die Grundplatte (500) angrenzend sind, und wobei eine Seite von jedem der rechtwinklig-dreieckigen Stützelemente (310) für die erste Modulanordnung (210), die der Grundplatte (500) entspricht, und eine Seite von jedem der rechtwinklig-dreieckigen Seitenstützelemente (320) für die zweite Modulanordnung (220), die der Grundplatte (500) entspricht, einander zugewandt sind.

21. Batteriepack (100) nach einem der Ansprüche 17 bis 20, wobei die erste Modulanordnung (210) und die zweite Modulanordnung (220) oben und unten in einer Richtung senkrecht zu einer Basis angeordnet sind.

22. Vorrichtung mit einem Batteriepack nach einem der Ansprüche 1 bis 21.

23. Vorrichtung nach Anspruch 22, wobei die Vorrichtung eine Haushaltsenergieversorgung, eine Energieversorgung für öffentliche Einrichtungen, eine Energieversorgung für große Lager, eine Energieversorgung für den Notfall, eine Energieversorgung für Computerräume, eine tragbare Energieversorgung, eine Energieversorgung für medizinische Einrichtungen, eine Energieversorgung für Feuerlöscheinrichtungen, eine Energieversorgung für Alarmeinrichtungen, eine Energieversorgung für Schutzeinrichtungen, ein Elektrofahrzeug, ein Hybrid-Elektrofahrzeug oder ein Plug-In-Hybrid-Elektrofahrzeug ist.

## Revendications

1. Bloc-batterie (100) comprenant :
(a) au moins un ensemble de modules (210) configuré pour avoir une structure dans laquelle des modules de batterie (211, 212 et 213), chacun d'eux comprenant une pluralité de cellules d'unité (112) électriquement connectées l'une à l'autre en étant empilées, sont agencés en étant adjacents l'un à l'autre ;
(b) une paire d'éléments de support latéraux (310) configurés pour avoir une structure pour entourer des côtés des modules de batterie qui sont le plus à l'extérieur (211, 212 et 213) de l'ensemble de modules (210) ;
(c) deux éléments de couplage ou plus (400) pour coupler les éléments de support latéraux (310) à l'ensemble de modules (210) ;
(d) un socle (500) pourvu, à une surface, de pièces de fixation (520) couplées aux éléments de support latéraux (310) et, à l'autre surface de celui-ci, d'une partie de montage externe (530) montée sur une structure externe ; et
(e) un couvercle de revêtement (600) couplé au socle (500) tout en entourant l'ensemble de modules ;
et **caractérisé en ce que** :
les éléments de support latéraux (310) et les modules de batterie (211, 212 et 213) sont pourvus, à des bords de ceux-ci, de trous de couplage (316, 317 et 318), dans lesquels les éléments de couplage (400) sont mécaniquement fixés ; et
chacun des éléments de support latéraux (310) est de forme triangulaire, et les trous de couplage (316, 317 et 318) sont formés aux bords de chacun des éléments de support latéraux triangulaires (310) ;
chacun des éléments de support latéraux (310) est configuré pour avoir une structure en forme de plaque et comprend une ou plusieurs ouvertures (330).

2. Bloc-batterie (100) selon la revendication 1, dans lequel chacune des cellules d'unité (112) est configurée pour avoir une structure comprenant une cellule de batterie en forme de plaque (10) ou une structure d'ensemble de cellules de batterie dans laquelle deux cellules de batterie en forme de plaque ou plus (10) sont montées dans un couvercle de cellule (118) dans un état dans lequel des bornes d'électrode (114 et 116) des cellules de batterie (10) sont exposées.

3. Bloc-batterie (100) selon la revendication 2, dans lequel la cellule de batterie en forme de plaque (10) est configurée pour avoir une structure dans laquelle un ensemble d'électrodes est monté dans un boîtier de batterie constitué d'une feuille stratifiée comprenant une couche de métal et une couche de résine et un bord extérieur du boîtier de batterie est scellé.

4. Bloc-batterie (100) selon la revendication 2 ou 3, dans lequel la cellule de batterie en forme de plaque (10) est une batterie secondaire au lithium.

5. Bloc-batterie (100) selon l'une quelconque des revendications 1 à 4, dans lequel chacun des modules de batterie (211, 212 et 213) est configuré pour avoir une structure d'empilement de cellules d'unité dans laquelle deux cellules d'unité ou plus (112) sont montées dans une cartouche et une plaque supérieure (216) et une plaque inférieure (218) sont montées sur des cellules de batterie le plus à l'extérieur (10) de la structure d'empilement de cellules d'unité pour fixer la structure d'empilement de cellules d'unité.

6. Bloc-batterie (100) selon l'une quelconque des revendications 1 à 5, dans lequel au moins l'un des éléments de support latéraux (310) est en forme de triangle rectangle dans lequel deux bords de l'au moins un des éléments de support latéraux (310) sont adjacents au socle (500).

7. Bloc-batterie (100) selon l'une quelconque des revendications 1 à 6, dans lequel une extrémité de chacun des éléments de support latéraux (310) est pliée pour être en contact avec le socle (500), et l'extrémité pliée de chacun des éléments de support latéraux (312) est pourvue de deux rainures de fixation ou plus (314 et 324) dans lesquelles des parties de fixation (520) du socle (500) sont couplées.

8. Bloc-batterie (100) selon la revendication 7, dans lequel une extrémité de chacun des éléments de support latéraux (310) est fixée au socle (500) en utilisant des boulons ou des rivets.

9. Bloc-batterie (100) selon l'une quelconque des revendications 1 à 8, dans lequel les éléments de couplage (400) sont des boulons longs ou des boulons rétractables.

10. Bloc-batterie (100) selon l'une quelconque des revendications 1 à 9, dans lequel le socle (500) et/ou le couvercle de revêtement (600) sont pourvus de nervures de renfort (640) formés pour avoir une structure concave-convexe.

11. Bloc-batterie (100) selon l'une quelconque des revendications 1 à 10, dans lequel le socle (500) comprend un trou de ventilation (510) communiquant avec un extérieur du bloc-batterie (100).

12. Bloc-batterie (100) selon l'une quelconque des revendications 1 à 11, dans lequel l'au moins un ensemble de modules comprend deux ensembles de modules ou plus (210 et 220) couplés au socle (500) dans un état dans lequel chacun des ensembles de modules (210 et 220) est fixé par les éléments de support latéraux (310 et 320).

13. Bloc-batterie (100) selon l'une quelconque des revendications 1 à 12, dans lequel le socle (500) est couplé à une structure externe inclinée par rapport à une base d'un angle de 20 à 160 degrés.

14. Bloc-batterie (100) selon la revendication 13, dans lequel le socle (500) est couplé à une structure externe inclinée par rapport à la base d'un angle de 60 à 120 degrés.

15. Bloc-batterie (100) selon l'une quelconque des revendications 1 à 14, dans lequel le couvercle de revêtement (600) est pourvu, sur au moins un côté de celui-ci, d'une poignée (550) de transport.

16. Bloc-batterie (100) selon l'une quelconque des revendications 1 à 15, dans lequel la partie de montage externe (530) est configurée pour avoir une structure faisant saillie pliée vers le bas (532).

17. Bloc-batterie (100) selon l'une quelconque des revendications 1 à 16, dans lequel l'au moins un ensemble de modules (210 et 220) comprend un premier ensemble de modules (210) comportant deux modules de batterie ou plus (211, 212 et 213) agencés tout en étant adjacents l'une à l'autre et un second ensemble de modules (220) comportant deux modules de batterie ou plus (221 et 222) agencés en étant adjacents l'un à l'autre, le premier ensemble de modules (210) et le second ensemble de modules (220) étant agencés de sorte que des éléments de support latéraux pour le premier ensemble de modules (310) et le second ensemble de modules (320) soient situés dans le même sens.

18. Bloc-batterie (100) selon la revendication 17, dans lequel le nombre de modules de batterie (211, 212 et 213) du premier ensemble de modules (210) est supérieur au nombre de modules de batterie (221 et 222) du second ensemble de modules (220).

19. Bloc-batterie (100) selon la revendication 17 ou 18, dans lequel le premier ensemble de modules (210) et le second ensemble de modules (220) sont fixés l'un à l'autre par un support (700) sur le côté opposé du socle (500).

20. Bloc-batterie (100) selon l'une quelconque des revendications 17 à 19, dans lequel chacun des éléments de support latéraux (310 et 320) pour le premier ensemble de modules (210) et le second ensemble de modules (220) est en forme de triangle rectangle dans lequel deux bords de chacun des éléments de support latéraux (310 et 320) sont adjacents au socle (500), et dans lequel un côté de chacun des éléments de support latéraux en forme de triangle rectangle (310) pour le premier ensemble de modules (210) correspondant au socle (500) et un côté de chacun des éléments de support latéraux en forme de triangle rectangle (320) pour le second ensemble de modules (220) correspondant au socle (500) sont face à face.

21. Bloc-batterie (100) selon l'une quelconque des revendications 17 à 20, dans lequel le premier ensemble de modules (210) et le second ensemble de modules (220) sont agencés en haut et en bas dans un sens perpendiculaire à une base.

22. Dispositif comprenant un bloc-batterie selon l'une quelconque des revendications 1 à 21.

23. Dispositif selon la revendication 22, dans lequel le dispositif est une alimentation électrique domestique, une alimentation électrique d'installations publiques, une alimentation électrique de grands magasins, une alimentation électrique de secours, une alimentation électrique de salles informatiques, une alimentation électrique portable, une alimentation électrique d'installations médicales, une alimentation électrique d'installations d'extinction d'incendie, une alimentation électrique d'installations d'alarme, une alimentation électrique d'installations de refuge, un véhicule électrique, un véhicule électrique hybride ou un véhicule électrique hybride rechargeable.
